# EUROPEAN PATENT APPLICATION

(11) **EP 4 787 819 A1**
(43) Date of publication of application: **05.08.2026**
(21) Application number: 25290006.3
(22) Date of filing: 31.01.2025
(51) Int. Cl.: H04L 67/12, H04L 67/55, H04W 4/42, G06Q 10/0631

(54) **METHOD, CONTROL PROGRAM, COMPUTER-READABLE DATA CARRIER, CONTROL UNIT, COMMUNICATION DEVICE, SYSTEM AND AIRCRAFT COMPRISING SAME FOR MANAGING WORK TASKS**

(71) Applicant: AIRBUS Operations GmbH, 21129 Hamburg (DE); Airbus Operations (S.A.S.), 31060 Toulouse Cedex 9 (FR)
(72) Inventor: Rottmann, Felix, 21129 Hamburg (DE); Thoerner, Sascha, 31060 Toulouse Cedex 9 (FR)
(74) Representative: LKGLOBAL Partnerschaftsgesellschaft mbB

(57) **Abstract**

A method, control program (11), computer-readable data carrier (12), control unit (3), communication system (1) and a corresponding aircraft (7) are provided, wherein for managing work tasks (W) to be accomplished within a pre-defined time frame (T), in particular a turn-around time measured between an expected arrival timepoint (e) and a scheduled departure time point (f) of an aircraft (7), the method comprises the steps of providing a computing device (10) on the aircraft (7) configured to handle data objects (D) containing status information (I) regarding the aircraft (7), at least one of an operational unit (U) of the aircraft (7), a transportation unit (V) to be carried by the aircraft (7) and/or an operating person (O) to be tasked with handling the aircraft (7) and/or the transportation unit (V) for achieving at least one respective work task (W); and providing at least one communication device (2), such as a mobile device, at least temporarily associated to the operating person (O) or to a further operating person (P) and adapted to send to and/or receive the data objects (D) to provide the status information (I) to the operating person (O) and/or to the further operating person (P).

## Description

### Technical Field

The present description relates to the field of communication systems involving multiple participants and concerning aircraft work tasks as well as management. In particular, the disclosure relates to a method of configuring a communication system for managing work tasks to be accomplished within a pre-defined time frame, in particular a turn-around time measured between an expected arrival timepoint and a scheduled departure time point of an aircraft, a computer program for controlling a communication system, a control unit for providing a data connection between a sender and at least one receiver of data objects in a communication system, a communication device, in particular a mobile device, configured to be at least temporarily associated to an operating person or to a further operating person, and to an aircraft.

### Technical Background

Managing the operation of aircraft can be challenging since it involves multiple participants supposed to fulfil certain work tasks within the aircraft and on the ground in relation to both, passenger as well as cargo transportation. Fulfilling the work tasks can be particularly demanding when they have to be accomplished within certain limited timeframe, such as a turnaround time between an expected arrival timepoint and a scheduled departure time point of an aircraft at an airport. In managing such work tasks, a reliable and efficient communication between the participants is essential which has been thematised in the prior art.

US 9 424 542 B2, for example, relates to a system for communicating between a commercial aircraft and the base of the airline that chartered the same when the aircraft is itself located on the ground during the flight preparation phases and before unloading the commercial freight or passengers. A method implements such a communication system by the commercial flight staff and/or the aircraft captain to prepare a flight and the commercial freight unloading phase.

US 8 280 741 B2 refers to a system of assistance in the entry of flight data for an aircraft transmitted between a crew on board the aircraft and a ground staff including, a radiofrequency communications link to transmit flight data between the crew and the ground staff. At least one means of sending and one means of receiving data on board the aircraft, wherein the system includes a voice recognition means capable of detecting a piece of data of a predefined type emitted, during the communications call, by the crew or the ground staff and a means of analysis and transcription of this piece of data in digital or alphanumeric form.

Methods, systems and respective devices allowing for communication between participants, e.g., crew members handling aircraft-related matters as known from the prior art may not fully fulfil all needs regarding reliability and availability on the one hand, as well as efficiency and convenience on the other hand. As to reliability and availability, known systems may rely on particular communication channels which may not always be accessible, because they are either bound to respective communication means, such as radio devices, or are denied in certain locations, for example, common network connections, such as Internet connections, cannot be made available due to certain privacy and/or technical restrictions. Concerning efficiency and convenience, the operation of respective communication means as known from the prior art may be time-consuming and rather cumbersome in view of that e.g. radio communications are commonly being relayed manually and involve human interaction which may in turn be error-prone and imprecise.

### Summary

In view of the above, it may be seen as an object to provide a reliable communication system capable of coordinating data exchange between participants handling aircraft, while respecting privacy and/or technical constraints of available communication means. In particular, it may be seen as an object to enable an efficient and low latency provision of information relating to work tasks to be accomplished with regard to the operation of aircraft, such as for managing aircraft turnaround procedures between arrival and departure. These and other objects are solved by the subject-matter of the independent claims.

According to an aspect, a method of configuring a communication system for managing work tasks to be accomplished within a pre-defined time frame, in particular a turn-around time measured between an expected arrival timepoint and a scheduled departure time point of an aircraft, is provided, comprising the steps of providing a computing device on the aircraft configured to handle data objects containing status information regarding the aircraft, at least one of an operational unit of the aircraft, a transportation unit to be carried by the aircraft and/or an operating person to be tasked with handling the aircraft and/or the transportation unit for achieving at least one respective work task; and providing at least one communication device, such as a mobile device, at least temporarily associated to the operating person or to a further operating person and adapted to send to and/or receive the data objects to provide the status information to the operating person and/or to the further operating person.

According to an aspect, a computer program for controlling a communication system is provided, comprising instructions which, when the computer program is executed by a computing device and/or a communication device, cause the computing device and/or a communication device to carry out a corresponding method.

According to an aspect, a computer-readable data carrier is provided, having stored thereon a corresponding computer program.

According to an aspect, a control unit for providing a data connection between a sender and at least one receiver of data objects in a communication system for managing work task to be accomplished within a turn-around time frame between an arrival timepoint and a scheduled departure time point of an aircraft, is provided, wherein the data objects are configured to contain status information regarding the aircraft, at least one of an operational unit of the aircraft, a transportation unit to be carried by the aircraft and/or the operating person to be tasked with handling the aircraft and/or a transportation unit transported by and/or supposed to be transported by the aircraft; and wherein the control unit is configured to enable an exchange of the data objects between a computing device on the aircraft and/or at least one communication device, such as a mobile device at least temporarily associated to the operating person and/or a further operating person, to act as the sender and/or receiver when carrying out a corresponding method, comprises a corresponding computer program and/or a corresponding computer-readable data carrier.

According to an aspect, a computing device for managing work task to be accomplished within a turn-around time frame between an arrival timepoint and a scheduled departure time point of an aircraft, is provided, wherein the computing device is configured to carry out a corresponding method, comprises a corresponding computer program, a corresponding computer-readable data carrier and/or a corresponding control unit.

According to an aspect, a communication device, in particular a mobile device, is provided, configured to be at least temporarily associated to an operating person or to a further operating person and adapted to send to and/or receive data objects to provide the status information for managing the work task to the operating person and/or to the further operating person when carrying out a corresponding method for managing work task to be accomplished within a turn-around time frame between an arrival timepoint and a scheduled departure time point of an aircraft, comprising a corresponding computer program, and/or a corresponding computer-readable data carrier.

According to an aspect, an aircraft is provided, comprising a corresponding computer-readable data carrier, at least one corresponding control unit, at least one corresponding communication device, and/or configured to exchange data objects with a corresponding communication device.

A corresponding communication system can be configured to carry out a corresponding method, may comprise a corresponding control unit, computing device, communication device and/or aircraft. The computing device can be located on the aircraft and/or at a ground station where the turn-around tasks are supposed to be managed at least in part. At least one computing device located at a ground station may provide a backend application. Computing devices located on the aircraft and/or at the ground station can act as server devices for the communication devices.

The present solution allows for monitoring the status information regarding the aircraft, the operational unit, the transportation unit, the operating person and/or further operating person, thus enabling to determine a progress of the turn-around tasks. Thereby it can be assessed whether tasks are being handled in a manner that they can be achieved within a respective time frame. This facilitates managing tasks, in particular turn-around tasks. Data objects can be data packets, messages or alike, which can be exchanged over a dedicated service under control of the carrier/airline.

The solution can provide a reliable independent communication platform capable of coordinating a reliable and convenient data exchange between participants handling aircraft, while respecting privacy and avoiding technical constraints of available communication means. Consequently, the present solution has the advantage over the prior art that it enables to implement a comprehensive and flexible management system based on an exchange of status information by means of respective data objects. Hence, the solution fosters efficient and transparent cooperation between preferably all crew members on the aircraft and on the ground to coordinate a best possible accomplishment of respective work tasks in a given time span, such as a turn-around time frame, while taking into all necessary status information regarding the aircraft and respective units involved.

Further developments can be derived from the dependent claims and from the following description. Many of the features described with reference to a method may be implemented as device features, or vice versa. Therefore, the description provided in the context of a method for configuring a communication system applies in an analogous manner also to a control unit, a communication device, a communication system, and/or any apparatus, including, but not limited to aircrafts or other transportation means, respectively. In particular, the steps of a methods and mentioned components involved therein may be implemented as functions of a control unit, a communication device, a communication system, and/or an aircraft, and their functions may be implemented as method steps.

According to an embodiment, the status information further comprises at least one time parameter relating to a time duration value and/or remaining accomplishment time value associated to at least one work task. The at least one time parameter can relate to a progress time and/or to a remaining time of the turn-around task. This further facilitates determining a progress and/or required remaining progress of a respective work task, and thus allows for an efficient and targeted management of the work task.

According to an embodiment, the status information further comprises at least one accomplishment parameter relating to an accomplishment value and/or remaining accomplishment value relating to at least one work task. The at least one accomplishment parameter can relate to a work progress and/or to a remaining work progress of the turn-around task. This additionally facilitates determining a progress and/or required remaining progress of a respective work task, and thus allows for an efficient and targeted management of the work task.

According to an embodiment, the status information further comprises at least one operational parameter of the aircraft, of at least one operational unit of the aircraft, and/or of a transportation unit to be carried by the aircraft. Operational parameters may indicate an operational status of the respective entity, such as the aircraft as a whole, an operational unit of the aircraft, and/or of a transportation unit to be carried by the aircraft. Thereby, it may be assessed whether the respective entity can be considered as being properly prepared for a next take-off of the aircraft. The operational unit can be a fuel tank, engine, water system, cargo bay, luggage compartment, cabin door, cargo door, mechanical device, kitchen appliance, or alike. In other words, any operational unit of the aircraft and/or in connection with the aircraft and/or transportation units may have or can be provided with respective data collection means, such as sensory systems, or alike, which may provide status information regarding the respective operational unit. This further helps in monitoring, the aircraft, the operational unit, the transportation unit, the operating person and/or further operating person, thus enabling to determine a progress of the turn-around tasks, and to assess whether tasks are being handled in a manner that they can be achieved within a respective time frame.

According to an embodiment, the status information further comprises at least one location parameter of the aircraft, the operating person, the further operating person, at least one operational unit of the aircraft, and/or of a transportation unit to be carried by the aircraft. Any operational unit of the aircraft and/or in connection with the aircraft and/or any transportation unit may have or can be provided with respective location data provision means, such as GPS tags, transponders, scanning locations, or alike, which may provide information regarding the respective location thereof. The computing device and/or communication device itself may be configured to provide respective location data. Thereby, a geographical availability of the aircraft, the operating person, the further operating person, at least one operational unit of the aircraft, and/or of a transportation unit to be carried by the aircraft can be assessed. This helps in monitoring a current location of the aircraft, the operational unit, the transportation unit, the operating person and/or further operating person, thus enabling to assess whether tasks can be handled in a manner that they can be achieved within a respective time frame.

According to an embodiment, at least one operating person and/or further operating person are or is, respectively, associated to a group of operators designated to fulfil the work task within and/or outside of the aircraft. Operators may further comprise load masters and/or ramp agents. Thereby, respective status information can be provided to a specific group of operators. This further helps in enhancing efficiency and reliability in communicating amongst different groups of operators when managing turn-around tasks.

According to an embodiment, the at least one transportation unit relates to a passenger, a cargo item and/or supply item. Consequently, status information regarding a passenger, a power item and/or a supply item can be provided. This may help to find and/or provide adequate service to certain passengers, cargo items and several supply items. Supply items can relate to any item which may be required to operate the aircraft, including fuels, lubricants, water, catering and other supplies. Thereby, managing operation of the aircraft can be further enhanced in general.

According to an embodiment, the data objects are being exchanged via a network structure providing a local domain enabling an exchange of the data objects between the computing device on the aircraft and the at least one communication device. The local domain may be hosted by the computing device on the aircraft. For example, at least temporarily, the computing device on the aircraft may serve as a server device with respect to the communication devices. This further helps in providing an independent and reliable communication system.

According to an embodiment, the method further comprises a step of performing a domain update, wherein the computing device on the aircraft and the at least one communication device update a number of status information by sending, receiving and/or requesting respective data objects. The domain update may involve sending query messages and/or response messages. The domain update can be carried out in a cyclic manner. Alternatively, or additionally, push messages may be implemented for sending messages to intended receivers. This additionally helps in providing an independent and reliable communication system.

According to an alternative or additional solution, a method of configuring a communication system for providing data objects to at least one operating person for operating an aircraft, is provided, comprising the steps of providing a computing device on the aircraft configured to handle data objects containing status information regarding the aircraft, at least one of an operational unit of the aircraft, a transportation unit to be carried by the aircraft and/or the operating person to be tasked with handling the aircraft and/or a transportation unit transported by and/or supposed to be transported by the aircraft, and providing at least one communication device, such as a mobile device, at least temporarily associated to the operating person or to a further operating person and adapted to send to and/or receive the data objects embedded in and/or in the form of push messages to provide the status information to the operating person and/or to the further operating person.

According to an aspect, a control unit for providing a data connection between a sender and at least one receiver of data objects in a communication system for operating an aircraft is provided, wherein the data objects are configured to contain status information regarding the aircraft, at least one of an operational unit of the aircraft, a transportation unit to be carried by the aircraft and/or the operating person to be tasked with handling the aircraft and/or a transportation unit transported by and/or supposed to be transported by the aircraft; and wherein the control unit is configured to enable an exchange of the data objects embedded in and/or in the form of push messages to provide the status information between a computing device on the aircraft and/or at least one communication device, such as a mobile device, at least temporarily associated to the operating person and/or a further operating person, to act as the sender and/or receiver when carrying out a corresponding method, comprises a corresponding computer program, and/or a corresponding computer-readable data carrier.

According to an aspect, a computing device for providing a data connection between a sender and at least one receiver of data objects in a communication system for operating an aircraft is provided, wherein the computing device is configured to carry out a corresponding method, comprises a corresponding computer program, a corresponding computer-readable data carrier and/or a corresponding control unit.

According to an aspect, a communication device, in particular a mobile device, is provided, configured to be at least temporarily associated to an operating person or to a further operating person and adapted to send to and/or receive data objects via a dedicated data connection in a communication system to provide the status information to the operating person and/or to the further operating person when carrying out a corresponding method for operating an aircraft, comprising a corresponding computer program, and/or a corresponding computer-readable data carrier.

According to an embodiment, the push messages are automatically indicated, displayed and/or announced. The announcement can involve generating an image, diagram, table, voice message prompt, or alike. For example, the push messages maybe provided in the form of or as Push Notifications. Thereby, respective status information contained in the data objects can be promptly and reliably be provided to a respective operating person, thus further enhancing efficiency of the proposed solution.

According to an embodiment, the computing device and/or at least one communication device are or is, respectively, configured to send and/or receive the push messages in order to provide at least one status information essentially in real-time. In other words, the push messages, such as push notifications, can be relayed to intended receivers as soon as possible, preferably without any or at least only a minimum latency and/or artificial delay. This further helps in promptly and reliably providing respective status information contained in the data objects to at least one respective operating person, thus further enhancing efficiency of the proposed solution.

According to an embodiment, the push messages comprise query messages for querying at least one status information. The query messages may be used to request so status information and/or to be used as a prompt causing a receiver to provide required status information to whomever is in need of such information. This additionally helps in promptly and reliably providing respective status information contained in the data objects be provided to at least one respective operating person, thus further enhancing efficiency of the proposed solution.

According to an embodiment, the query messages are being sent to a designated operating person, further operating person, group of operators, operational unit, transportational unit, aircraft, and/or ground station. Every participant in the communication system can be provided with a designated identification, such as a unique id-number and/or code. In other words, a whole group of receivers may be queried, or individual receivers may be addressed by the query messages. This further helps in enhancing flexibility and communicating with different units or operators.

According to an embodiment, the push messages comprise response messages for providing at least one status information. For example, the response messages may be automatically returned from a designated operating person, further operating person, group of operators, operational unit, transportational unit, aircraft, and/or ground station, if respective status information is readily available. Otherwise, a respective receiver of the query message is at least aware of that response message is expected and/or required needed, for example, for assessing status information regarding the aircraft, at least one of an operational unit of the aircraft, a transportation unit to be carried by the aircraft and/or the operating person to be tasked with handling the aircraft and/or a transportation unit transported by and/or supposed to be transported by the aircraft. This further helps in providing a comprehensive and efficient communication system for operating aircraft.

According to an embodiment, senders and/or receivers of status information within the communication system are listed in a communication table. The communication table may particularly comprise group identifiers, individual identifiers, location parameters, relation parameters, time parameters, operational parameters and/or accomplishment parameters relating to any operating person, further operating person, aircraft, operational unit, transportation unit and/or work task referred to herein. Thereby, the communication table can be used as a lookup table for identifying any participant and/or component of the communication system. This additionally helps in providing a comprehensive and efficient communication system for operating aircraft.

According to an embodiment, the data objects are being exchanged via a dedicated data connection configured to enable an exchange of the push messages between the computing device on the aircraft and the at least one communication device. The data connection can involve a dedicated communication channel. In other words, dedicated communication channels may be provided between participants of the communication system. This further helps in enabling a reliable and convenient data exchange between participants handling aircraft, while respecting privacy and avoiding technical constraints of available communication means.

According to an embodiment, the dedicated data connection is provided in a network structure hosted by the computing device located on the aircraft. The push messages may be used in a communication system for managing work tasks to be accomplished within a pre-defined time frame, in particular a turn-around time measured between an expected arrival time-point and a scheduled departure time point of an aircraft. By hosting the network structure on the aircraft, the communication system can be provided, for example, as a local domain, in regions and/or locations with limited or no available Internet access. Therefore, hosting a network structure hosted by the computing device on the aircraft additionally helps in enabling a reliable and convenient data exchange between participants handling aircraft, while respecting privacy and avoiding technical constraints of available communication means.

### Brief Description of the Drawings

The subject matter will hereinafter be described in conjunction with the following drawing figures, wherein like numerals denote like elements, and wherein:
Fig. 1 is a schematic representation of a communication system.
Fig. 2 is another schematic representation of the communication system.
Fig. 3 is a schematic a representation of a computing device and communication devices in a local domain of the communication system.
Fig. 4 is a schematic a representation of an aircraft with a computing device and communication devices in a local domain of the communication system.
Fig. 5 is a schematic a representation of a computing device and communication devices in a global domain of the communication system.
Fig. 6 is a schematic a representation a computing device and communication devices of the communication system configured for exchanging push messages between each other.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

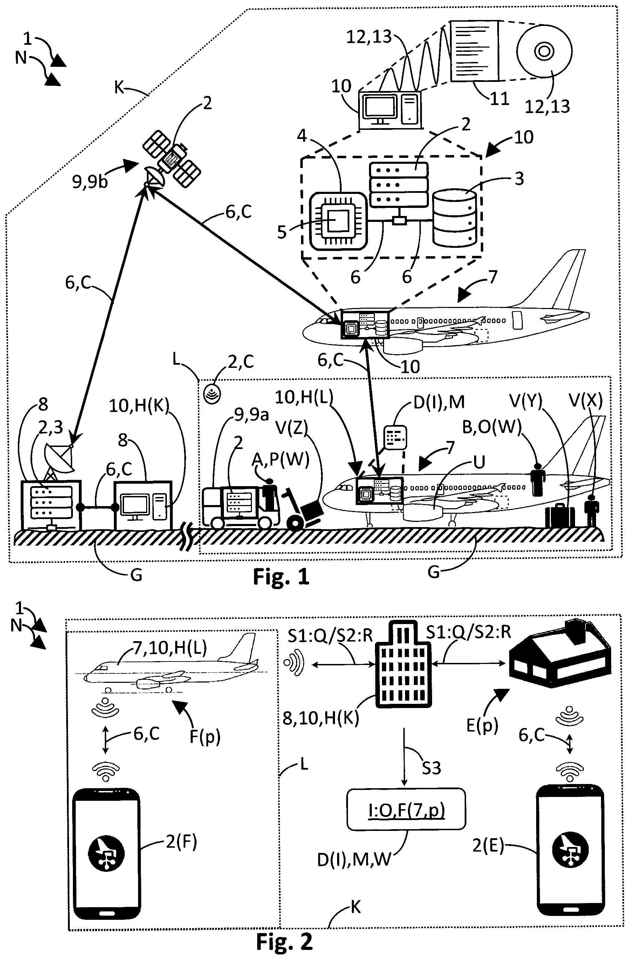

Fig. 1 shows a schematic representation of a communication system 1 comprising a number of communication devices 2 and respective control units 3 which may be provided with interface modules 4 to connect the communication devices 2 and/or control units 3 to control elements 5 and can be connected to each other via respective transmission lines 6 which may be configured transport any kind of data, information, power and/or energy, including photonic links. Therefore, the transmission lines 6 may involve any suitable wired, wireless, and or optical communication means, including lines, cables, transceivers, antennas, satellite dishes, and alike. In the present example, the communication devices 2 and respective control unit 3 may be provided to apparatuses, such as aircraft 7, ground stations 8 on a ground G and/or support vehicles 9, ground vehicles 9a and/or satellites 9b.

The aircraft 7, ground stations 8 and/or support vehicles 9 may comprise computer devices 10 or systems which may include communication devices 2, control units 3, interface modules 4, control elements 5 and/or transmission lines 6 as desired or required for their respective application, e.g. for enabling data transfer, storage, computation, secure communication, and/or sensing of certain parameters and/or values, such as for sensing acceleration, gravity, magnetic effects, photonic effects, radiation, rotation, or alike, by means of the control elements 5. The communication devices 2 and/or control units 3 can be configured for establishing a network structure N via respective communication channels C for transferring data objects D comprising status information I regarding the aircraft 7, at least one of an operational unit U of the aircraft 7, a transportation unit V to be carried by the aircraft 7 and/or an operating person O to be tasked with handling the aircraft 7 and/or the transportation unit V for achieving at least one respective work task W. The transportation units V may comprise any passenger person X, cargo item Y asset or supply item Z to be transported with and/or required for operation of the aircraft 7.

The computing devices 10, communication devices 2 and/or control units 3 may be configured to address each other in a global domain K and/or in a local domain L of the communication system 1, in particular the network structure N. The global domain K may be hosted by a computing device 10 serving as a domain controller H for the global domain K located at a ground station 8 at the ground G. A number of local domains L may be hosted by respective computing devices 10 on aircraft 7 which may serve as the domain controllers H for the respective local domain L. The global domain G can encompass the local domains L. Within the domains, the data objects D may be sent as push messages M, for example, in the form of Push Notifications, between respective senders A and receivers B.

A computer program 11 for controlling the computing devices 10 can be stored on a computer-readable data carrier 12 which may take the form of a computer-readable medium 13 and/or data carrier signal 14. The computer system 10 may comprise the communication device 2, control unit 3, interface module 4, control element 5 and/or transmission lines 7, the computer program 11, the computer-readable data carrier 12, which may be adapted for exchanging data between the respective above-mentioned components. Control elements 9 may be any kind of data source, such as a measuring element, sensor, output device and/or actuator of any of the aircraft 7. The involved communication devices 2 may therefore serve as source communication devices 2 in the sense of a sender A, destination communication devices 2 the sense of a receiver B.

Fig. 2 shows another schematic representation of the communication system 1. Here, it becomes apparent that a location parameter p or geographical position of an operating person O, for example, a possible member of a cabin crew, can be determined by assessing whether a communication device 2, e.g., a personal mobile device, smart phone, tablet device, laptop computer, and/or any other appropriate device capable for telecommunication, is located in an aircraft environment F, such as a flight-related environment, and/or in any other environment E, such as an enterprise related environment and/or private environment, including office buildings, home office arrangements, or alike. Query messages Q may be sent by the computing device 10 at the ground station 8, such as an airline ground office, to each of the communication devices 2 via respective communications channels C and the communication devices 2 may respond with respective response messages R, for example, informing the computing device 10 of their respective location parameter p.

A data object D with status information I can then be sent to at least one communication device 2 associated to the operating person O located in the aircraft environment F of the aircraft 7 and/or relating to the required location parameter p, which may relate to a specific work task W, and can be send in the form of a push message M. The data object D can be provided to the communication device 2 via the global domain K and/or a respective local domain L hosted by the computing device 10 on the aircraft 7. Any communication with the communication devices 2 can at least partly be carried out in a wireless manner via respective transmission lines 6, such as Wi-Fi and/or other telecommunication setups including public and/or private the communication networks.

When carrying out steps S of a method for configuring the communication system, for example, in a first step S1, query messages Q can be sent out within the global domain K and/or at least one local domain L, for example, to perform a domain update. The query messages Q can be sent out by respective computing devices 10 acting as domain controller H for the global domain K, and/or the local domain L, respectively. In a second step S2, the communication devices 2 connected within the respective domain can respond with the reply message R indicating their location parameter p and/or any other parameter required for managing work tasks W, or alike. The third step S3 a data object D, for example, in the form of a push message M, can be sent to at least one designated medication device 2, for example, a communication device located in the act of the F, and possibly with a respective location parameter p of the aircraft, to provide status information I, for instance, addressing a specific work task W to be carried out with respect to the aircraft 7.

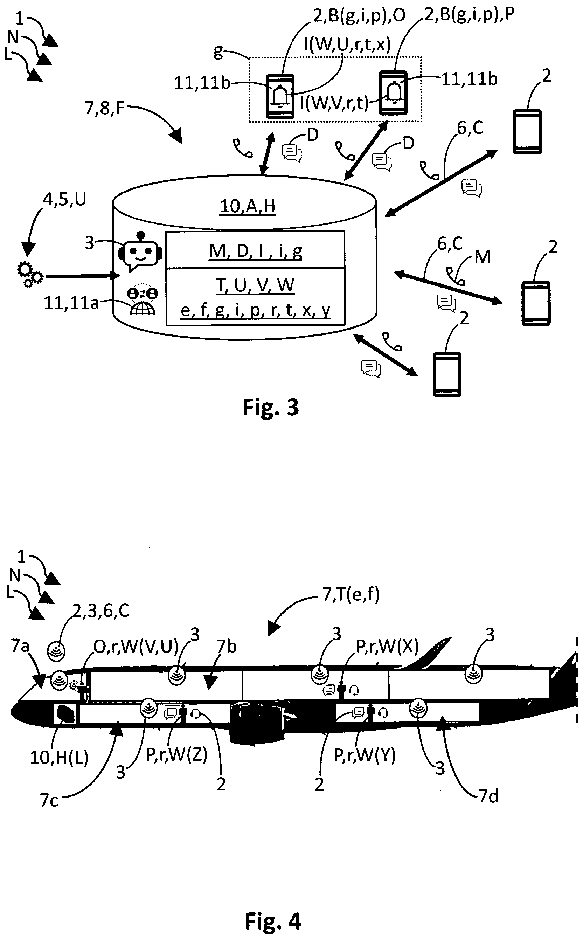

Fig. 3 shows a schematic a representation of a computing device 10 and communication devices 2 in a local domain L of the communication system 1. The local domain L can be hosted by the computing device 10 located on the aircraft 7. The computing device 10 and at least one respective control unit 3 can provide the network structure N within and/or around the aircraft 7 enabling communication between the computing device 10 and a number of communication devices 2.

The computing device 10 can act as a server device running a server program dataset 11a. The computer program 11 can comprise the server program dataset 11a. The communication devices 2 can act as client devices running a client program dataset 11b, for example in the form of an app or applet, which can be installed on the communication devices 2. The computer program 11 can comprise the client program dataset 11b.

The server program dataset 11a can provide tools and means for managing and administrating any kind of data and parameters with respect to the communication devices 2, control units 3, interface modules 4, control elements 5, transmission lines 6, and/or the aircraft 7. The parameters may comprise listings of communication devices 2, operating persons O and/or further operating persons P associated to the aircraft 7. Furthermore, the parameters may comprise a time frame T, such as a turnaround time of the aircraft 7, as well as definitions and/or listings of operational units U, transportation units V, asset or work tasks W to be carried out with respect to the aircraft 7, for example, within the time frame T.

The communication devices 2, control units 3, interface modules 4, control elements 5, transmission lines 6, aircrafts 7, operating persons O and/or further operating persons P, operational units U, transportation units V, and/or work tasks W can be provided with group identifiers g, individual identifiers i, location parameters p, relation parameters r, time parameters t, operational parameters x, and/or accomplishment parameters y as desired or required for operating the aircraft 7. The relation parameters r may be used for correlating, linking, coupling and/or designating any of the definitions and/or parameters to each other, for example in relating to a designated relationship between operational units U, transportation units V and/or work tasks W as well as associated operating persons O, further operating persons P, time parameters t, operational parameters x, and/or accomplishment parameters y, etc. The time frame T may be calculated between an arrival time-point e and a departure time-point f of the aircraft 7 at a certain location, such as an airport, airport gate, loading gate, maintenance workshop, hangar, or alike.

For example, based on tasks to be carried out with respect to a transportation unit V and/or a work task W, an operating person O and/or further operating person P may be selected for carrying out respective tasks. The operating person O and/or further operating person P can be identified by a respective group identifier g asset or by their individual identifiers i. Corresponding status information I can be compiled by the computer program 11, in particular the server program dataset 11a, to then be sent as data objects D to the operating person O and/or further operating person P by the control unit 3 via respective transmission lines 6 through designated communication channels C.

In the present example, the operating person O and further operating person P can receive the data objects D providing them with status information I regarding a work task W concerning an operational unit U having an operational parameter x that is connected to a certain time parameter t and/or regarding a work task W concerning the transportational unit V connected to the time parameter t, while the work tasks W can be related to each other as it can be indicated by the respective relation parameter r. The computing device 10 thereby acts as the sender A, while the communication devices 2 act as the receivers B, where the respective status information I can be provided to the operating person O and/or further operating person P, respectively, by means of the computer program 11, in particular, the client program dataset 11b.

For providing status information I to the operating person O and/or further operating person P, respective push messages M may be used when sending the objects D. The data objects D and/or respective status information I can be displayed on a display of the communication devices 2 and/or can be converted to audio messages, for example in that the push messages M are automatically being played to the operating person O and/or further operating person P as human and/or computer-generated audio. The operating person O and/or further operating person P can respond to the status information I by acting as senders A sending, respective data objects D and/or push messages M back to the computer device 10 acting as the receiver B, for example in order to confirm receipt and commencing of the work task W, accomplishment of the work task W and/or failing in accomplishing the work task W, for example using the operational parameters x, and/or accomplishment parameters y.

Fig. 4 shows a schematic a representation of an aircraft 7 with a computing device 10 and communication devices 2 in a local domain L of the communication system 1. Here it becomes apparent, that operating persons O and/or further operating persons P can be associated to different work tasks W relating to different sections 7a to 7d of the aircraft 7. The relation between the operating person O and/or further operating person P on the one hand and the respective section 7a to 7d and/or work task W can be expressed by the location parameter p and/or relation parameter r.

For example, the sections 7a to 7d can comprise a first section 7a, such as a cockpit and/or crew area, a second section 7b, such as transportation area for passengers X and/or cargo items Y, a third section 7c, such as an equipment bay holding supply items Z, and/or the fourth section 7d, such as a cargo bay holding cargo items Y. Each of the sections 7a to 7d can be equipped with a designated control unit 3 which can be able to address respective communication devices 2 associated to the operating person O and/or further operating person P. A further communication device 2 and/or control unit 3 can be associated to the aircraft 7, for example, for providing the transition line 6 and respective communication channel C to the aircraft 7 on the whole from outside thereof, for example, via a designated wireless connection.

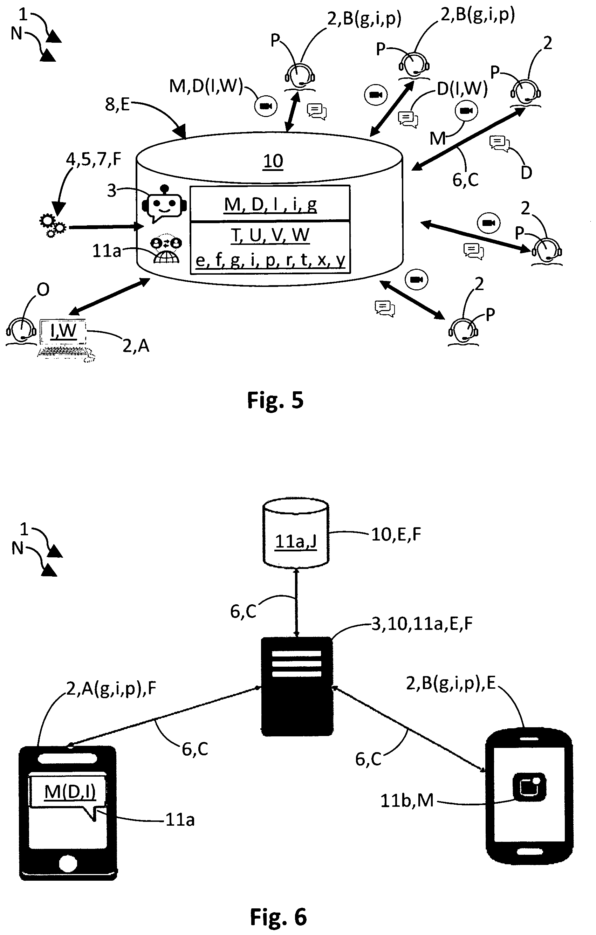

Fig. 5 shows a schematic a representation of a computing device 10 and communication devices 2 in a global domain K of the communication system 1. Here it becomes apparent that an operating person O may act as a sender A addressing at least one or a number of further operating persons P as receivers B of data objects D. The communication devices 2, control units 3, interface modules 4, control elements 5, transmission lines 6, aircrafts 7, operating persons O and/or further operating persons P, operational units U, transportation units V, and/or work tasks W can again be provided with group identifiers g, individual identifiers i, location parameters p, relation parameters r, time parameters t, operational parameters x, and/or accomplishment parameters y, as desired or required for operating the aircraft 7. The relation parameters r may be used for correlating, linking, coupling and/or designating any of the definitions and/or parameters to each other, for example in relating to a designated relationship between operational units U, transportation units V and/or work tasks W as well as associated operating persons O, further operating persons P, time parameters t, operational parameters x, and/or accomplishment parameters y, etc. The time frame T may be calculated between an arrival time-point e and a departure time-point f of the aircraft 7 at a certain location, such as an airport, airport gate, loading gate, maintenance bay, hangar, or alike.

For example, the operating person O can be located in another environment E and can be tasked with managing a certain work task W based on respective status information I from the aircraft environment F. The operating person O may communicate with a group of or at least one further operating person P regarding the respective work task W. Therefore, the communication device 2, such as a computer workstation and/or laptop, associated to the operating person O can act as a sender A, for sending data objects D containing the respect of status information I and/or information regarding the corresponding work task W to the application devices 2 of a group of or at least one further operating person P acting as respective receiver B, while again push messages M may be used, which can, for example, provided as voice messages.

Fig. 6 shows a schematic a representation of a computing device 10 and communication devices 2 of the communication system 1 configured for exchanging push messages M between each other. A control unit 3 and/or computing device 10 can provide communication channels C between the communication devices 2. The control unit 3 and/or computing device 10 can run the server program dataset 11a. The communication devices 2 can run the client program dataset 11b. A communication table J may be provided in a further computing device 10 which can run the server program dataset 11a and/or can be administered by the control unit 3 and/or computing device 10. The communication table J can contain respective group identifiers g, individual identifiers I and/or location parameters p of the computing devices 2. All computing devices 2 can register in the communication system 1 as communication partners in the communication table J, where a respective group identifier g, individual identifier i, and/or location parameter p can be assigned to the communication devices 2 and/or operating persons P, Q.

For example, at least one of the communication devices 2 can be located in the aircraft environment F and the respective operating person O, P may need to send a push message M containing a data object D with certain status information I to another operating person O, P located in the other environment E, or vice versa. Alternatively, or additionally, all devices can be located in the same environment. One of the communication devices 2 can act as a sender A sending the push message M to the control unit 3 and/or computing device 10 which can then look-up a respective group identifier g, individual identifier i, and/or location parameter p of the other communication device 2, such that the push message M can be relayed to the other communication device 2 by the control unit 3 and/or computing device 10.

The proposed exemplary embodiments of the communication system 1 and its components enable to provide an automatic aircraft ground handling crew identification and onboard crew intercommunication service. Dedicated messages/information targeting the onboard crew only can be send from within the local domain L network structure N and/or by the ground operation centre/loadmaster/ramp agent to the aircraft crew registered within the local network as well as automatic messages generated by an application hosted on an onboard computing device 10 running a server program dataset 11a and acting as a server providing important information to the ground crew, for example, via automatic audio and/or text messages by compiled by a bot analysing aircraft data e.g., fuelling finished, etc.

The service can be accessed via a client program dataset 11b, for example, a dedicated mobile application from any common mobile device which is connected to aircraft onboard server infrastructure and may thereby act as a communication device 2 as described herein. Independent (e.g. from the internet) onboard intercommunication service offer onboard crew-to-crew communication on the ground G and during flight. The application/service is able to identify the registered operators as users and can broadcast aircraft operation related status information I via the audio and text messages to the onboard crew without knowing which individual is actually on board. Furthermore, the service can deliver automatic information based on aircraft data analytics. All this will help to reduce the ground and onboard crew workload by providing direct communication access independent from the geo location of the aircraft.

According to an example embodiment, a Local Push Notifications Service in the Cabin for Smartphones acting as communication devices 2 can involve the following aspects:
- Notification Service for Smartphones without need for an internet connection,
- distribution for notifications based on data objects D hosted on the aircraft server,
- connected devices receive notifications via Wi-Fi network,
- service which allows to reach crew/cargo handlers in any situation if the smartphone has installed the client program dataset, e.g. a specific application, and is turned on,
- no need to open app initially,
- supporting multiple device and/or operating system types.

According to an example embodiment, a Crew Identification and Messaging with a Ground Office can involve the following aspects:
- Check via aircraft infrastructure and mobile App which loadmasters are on the aircraft 7 and not at the aircraft 7,
- automatic identification of loadmasters on/around aircraft 7,
- assuring, that only persons one the aircraft 7 can load transportation units V, such as ULDs, and mark them as "loaded", for example, by means of a corresponding relation operational parameter x,
- preventing unsafe remote adaptations of Loading Instruction Reports,
- communication between a loadmaster at the aircraft 7 and Airline Ground Office via Aircraft infrastructure.

According to an example embodiment, an automatic aircraft ground handling crew identification and onboard crew communication service can involve the following further aspects:
- Digital functionality provides an overview which operating person P, Q is on-board the aircraft 7 and where these person are located,
- The service can be hosted on the on-board server as a backend application and can provide real time information,
- The operating persons P, Q (crew) need to be locked in the onboard network structure N with their communication devices 2, e.g., personal portable devices where a dedicated application is installed as the client program dataset 11b,
- operating persons P, Q need to be logged in on the onboard digital network and with the wireless access point IP registration each user (person) can be identified and localised,
- a dedicated messages/information targeting the onboard crew only can be sent from within the local network or by the ground operation centre/loadmaster/ramp agent to the A/C crew registered within the local network as well as automatic messages generated by the server program dataset 11b, such as an application hosted on an onboard server providing important status information I to the ground crew via automatic audio or text messages, e.g., by a bot analysing aircraft data e.g., fuelling finished, etc.,
- using the onboard inter crew communication service enables the crew to send push messages M and/or to perform voice and video calls between crew members using, e.g., Bluetooth headsets as communication devices 2,
- the crew messages can provide predefined messages in order to reduce crew workload for typing in free text messages, which can nevertheless be made available if needed.

According to present example embodiments, communication devices 2 in the form of mobile devices can handle and support crew interactions. In the air, a guarantee for internet access is not given all the time. The (local) push messages M providing respective notifications enable to implement a solution for getting notifications without internet access. A dedicated service can be hosted on the onboard infrastructure of the aircraft 7 which can reach the communication devices 2 all the time, e.g., when they are connected to Wi-Fi access points in the cabin. The client program dataset 11b can provide a respective application enabling to open an interface and also to create a service on the communication device 2, such as a mobile device, which will be enabled automatically after a restart or power off of the device. This enables crew attendees and cargo loaders to receive notification during flight and on the ground G in real time without internet access.

According to an example embodiment, a communication service in the aircraft 7 cabin (PoV AISD side) can involve the following aspects:
- During flight, there might be no guarantee that communication devices have a stable internet connection,
- notifications in the cabin should be delivered instantly,
- older notifications may not be helpful (if only accessible when having internet access again),
- a proprietary Push Notification server provided by the computing device 10 on the aircraft 7 can provide the network structure N for establishing a cabin network,
- notifications can also be received if the respective application on the communication device 2 is merely running in the background, e.g., it is not open / phone is locked.

According to an example embodiment, a client program application 11b may be configured to perform the following steps S:
- *NEAppPushProvider class* (Network Extension) can be provided,
- offers a channel to receive notifications from local network,
- local network includes a server which sends the notifications to the channel,
- possible Push Notification approach,
- listen all the time if phone is on,
- reestablish the channel by restart of phone,
- heed power consumption requirements.

According to a further example embodiment, a client program application 11b may be configured to perform the following steps S:
- First start of application on phone creates a service in background,
- service runs in for- and background - also restarts when device turned off / restart,
- establish connection with a WebSocket that triggers events like new push message M for operating person O, smoke alert, etc...,
- enable e.g. two weeks of uninterrupted operation considering power consumptions of e.g. 0,3% for 148h (5000mAh battery),
- worst case scenario may be that no connection to a webhook is available after repeated reconnection retry.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: communication system
- 2: communication device
- 3: control unit
- 4: interface module
- 5: control element
- 6: transmission line
- 7: aircraft
- 7a: first section
- 7b: second section
- 7c: third section
- 7d: fourth section
- 8: ground station
- 9: support vehicle
- 9a: ground vehicle
- 9b: satellite

- 10: computing device / computer system
- 11: computer program
- 11a: server program dataset
- 11b: client program dataset
- 12: computer-readable data carrier
- 13: computer-readable medium
- 14: data carrier signal
- e: arrival time-point
- f: departure time-point
- g: group identifier
- i: individual identifier / ID-number / code
- p: location parameter / geographical position
- r: relation/designation parameter
- t: time parameter
- x: operational parameter
- y: accomplishment parameter

- A: source / sender
- B: destination / receiver
- C: communication channel
- D: data object
- E: other environment / enterprise related
- F: aircraft environment / flight related
- G: ground
- H: domain controller
- I: status information
- J: communication table
- K: global domain
- L: local domain
- M: push message / notification
- N: network structure
- O: operating person
- P: further operating person
- Q: query message
- R: response message
- S: step
- T: time frame / turnaround time
- U: operational unit
- V: transportation unit
- W: work task / item / turn-around task
- X: passenger/person
- Y: cargo item
- Z: supply item

- S1: send query messages
- S2: receive response messages
- S3: provide data object and/or push message

## Claims

1. Method of configuring a communication system (1) for managing work tasks (W) to be accomplished within a pre-defined time frame (T), in particular a turn-around time measured between an expected arrival timepoint (e) and a scheduled departure time point (f) of an aircraft (7), comprising the steps of
providing a computing device (10) on the aircraft (7) configured to handle data objects (D) containing status information (I) regarding the aircraft (7), at least one of an operational unit (U) of the aircraft (7), a transportation unit (V) to be carried by the aircraft (7) and/or an operating person (O) to be tasked with handling the aircraft (7) and/or the transportation unit (V) for achieving at least one respective work task (W); and
providing at least one communication device (2), such as a mobile device, at least temporarily associated to the operating person (O) or to a further operating person (P) and adapted to send to and/or receive the data objects (D) to provide the status information (I) to the operating person (O) and/or to the further operating person (P).

2. Method according to claim 1, wherein the status information (I) further comprises at least one time parameter (t) relating to a time duration value and/or remaining accomplishment time value associated to at least one work task (W).

3. Method according to claim 1 or 2, wherein the status information (I) further comprises at least one accomplishment parameter (y) relating to an accomplishment value and/or remaining accomplishment value relating to at least one work task (W).

4. Method according to at least one of claims 1 to 3, wherein the status information (I) further comprises at least one operational parameter (x) of the aircraft (7), of at least one operational unit (U) of the aircraft (7), and/or of at least one transportation unit (V) to be carried by the aircraft (7).

5. Method according to claim 4, wherein the status information (I) further comprises at least one location parameter (p) of the aircraft (7), the operating person (O), the further operating person (P), at least one operational unit (U) of the aircraft (7), and/or of a transportation unit (V) to be carried by the aircraft (7).

6. Method according to at least one of claims 1 to 5, wherein at least one operating person (O) and/or further operating person are or is, respectively, associated to a group of operators (g) designated to fulfill the work task (W) within and/or outside of the aircraft (7).

7. Method according to at least one of claims 1 to 6, wherein at least one transportation unit (V) relates to a passenger (X), a cargo item (Y) and/or supply item (Z).

8. Method according to at least one of claims 1 to 7, wherein the data objects (D) are being exchanged via a network structure (N) providing a local domain (L) enabling an exchange of the data objects (D) between the computing device (10) on the aircraft (7) and the at least one communication device (2).

9. Method according to claim 8, further comprising a step (S) of performing a domain update, wherein the computing device (10) on the aircraft (7) and the at least one communication device (2) update a number of status information (I) by sending, receiving and/or requesting respective data objects.

10. Computer program (11) for controlling a communication system (1), comprising instructions which, when the computer program (11) is executed by a computing device (10) and/or a communication device (2), cause the computing device (10) and/or a communication device (2) to carry out a method of at least one of claims 1 to 9.

11. Computer-readable data carrier (12) having stored thereon the computer program according to claim 10.

12. Control unit (3) for providing a data connection (C) between a sender (A) and at least one receiver (B) of data objects (D) in a communication system (1) for managing work task (W) to be accomplished within a turn-around time frame (T) between an arrival timepoint (e) and a scheduled departure time point (f) of an aircraft (7),
wherein the data objects (D) are configured to contain status information (I) regarding the aircraft (7), at least one of an operational unit (U) of the aircraft (7), a transportation unit (V) to be carried by the aircraft (7) and/or the operating person (O) to be tasked with handling the aircraft (7) and/or a transportation unit (V) transported by and/or supposed to be transported by the aircraft (7); and
wherein the control unit (2) is configured to enable an exchange of the data objects (D) between a computing device (10) on the aircraft (7) and/or at least one communication device (2), such as a mobile device at least temporarily associated to the operating person (O) and/or a further operating person (P), to act as the sender (A) and/or receiver (B) when carrying out a method according to at least one of claims 1 to 9, comprises a computer program (11) according to claim 10, and/or a computer-readable data carrier (12) according to claim 11.

13. Computing device (10) for managing work task (W) to be accomplished within a turn-around time frame (T) between an arrival timepoint (e) and a scheduled departure time point (f) of an aircraft (7), wherein the computing device (10) is configured to carry out a method according to at least one of claims 1 to 9, comprises a computer program (11) according to claim 10, a computer-readable data carrier (12) according to claim 11 and/or a control unit (3) according to claim 12.

14. Communication device (2), in particular a mobile device, configured to be at least temporarily associated to an operating person (O) or to a further operating person (P) and adapted to send to and/or receive data objects (D) to provide the status information (I) for managing the work task (W) to the operating person (O) and/or to the further operating person (P) when carrying out a method for managing work task (W) to be accomplished within a turn-around time frame (T) between an arrival timepoint (e) and a scheduled departure time point (f) of an aircraft (7) according a at least one of claims 1 to 9, comprising a computer program (11) according to claim 10, and/or a computer-readable data carrier (12) according to claim 11.

15. Aircraft (7), comprising a computer-readable data carrier (12) according to claim 11, at least one control unit (3) according to claim 12, at least one communication device (2) according to claim 13, and/or configured to exchange data objects (D) with a communication device (2) according to claim 14.
